(19) Europäisches Patentamt
European Patent Office
Office européen des brevets

(11) Publication number: **0 275 304**
**B1**

(12) **EUROPEAN PATENT SPECIFICATION**

(45) Date of publication of patent specification: **16.01.91**

(51) Int. Cl.[5]: **E 21 B 43/00**

(21) Application number: **87905352.8**

(22) Date of filing: **24.07.87**

(86) International application number:
**PCT/US87/01796**

(87) International publication number:
**WO 88/01010 11.02.88 Gazette 88/04**

# (54) CALCIUM-FREE CLEAR HIGH DENSITY FLUIDS.

(30) Priority: **30.07.86 US 892155**
**08.12.86 US 938866**

(43) Date of publication of application:
**27.07.88 Bulletin 88/30**

(45) Publication of the grant of the patent:
**16.01.91 Bulletin 91/03**

(84) Designated Contracting States:
**GB IT**

(56) References cited:
**GB-A-2 027 686**
**GB-A-2 121 397**
**US-A-4 292 183**
**US-A-4 415 463**
**US-A-4 420 406**
**US-A-4 554 081**
**US-A-4 609 476**
**US-A-4 615 740**
**US-A-4 619 773**

(73) Proprietor: **Great Lakes Chemical Corporation**
**P.O. Box 2200 Rt. 52 NW**
**West Lafayette, IN 47906 (US)**

(72) Inventor: **DADGAR, Ahmad**
**1018 Westridge Circle**
**Lafayette, IN 47905 (US)**
Inventor: **SHIN, Charles, C.**
**1909 Tanglewood Drive**
**Lafayette, IN 47905 (US)**

(74) Representative: **Bond, Bentley George et al**
**HASELTINE LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the preparation and use of solids-free fluids for oil and gas drilling, completion and workover operations. More particularly, the invention relates to new calcium-free fluids which may be used as completion, packer and perforating media in oil and gas drilling and completion operations when formations have high carbonate and/or high sulfate ion concentrations.

Special fluids known as drilling fluids are used in the drilling, completion, and workover of oil and gas wells. These fluids ideally perform the following functions: transport drill cuttings or solids debris to the surface; suspend cuttings and solids in lost circulation zones; counteract formation pressure; maintain borehole stability; cool and lubricate downhole equipment; aid the suspension of tool string and casing; minimize corrosion; and minimize damage to formation permeability.

Use of these drilling fluids has greatly increased the efficiency of operations at the well. However, problems with certain applications of these fluids have been encountered. For example, when used in completion operations, these fluids leave a deposit of acid-insoluble filter cake in the bore hole which blocks production and is difficult to remove. Further, use of these fluids may permit entry of fresh water mud filtrates which can promote the hydration of naturally occurring clay materials which swell in volume and restrict permeability. Finally, because of the high alkalinity of many of these fluids, precipitation of insoluble hydroxides occurs along the filtration path, impeding production. These problems have been partially overcome by underreaming or acidizing of the bore hole if the damage is not severe.

In recent years, however, specialized solids free completion and workover fluids have been developed to help prevent this type of damage to formation permeability. These solids-free fluids are placed across the production zone during completion and workover operations performing the same functions as drilling fluids but minimizing formation damage. These solids-free completion fluids comprise concentrated saltwater solutions in the density range of about 1120 to 2520 kg/m$^3$ (10 to 21 pounds per gallon ("lb/gal" or "ppg")) and may be used as perforation, gravel pack, packer, and workover media. Examples of these solutions include aqueous solutions of alkali and alkaline earth metal and zinc halides such as sodium chloride, sodium bromide, calcium chloride, calcium bromide, zinc bromide or mixtures thereof.

As disclosed in 1964 in U.S. Patent No. 3,126,950 ("'950"), concentrated solutions of zinc chloride and/or calcium chloride can be prepared and used as well completion fluids up to a density of about 2040 kg/m$^3$ (17 lb/gal). As noted in the '950 patent, however, zinc chloride/calcium chloride solutions with densities greater than 1680 kg/m$^3$ (14 lb/gal) have high ferrous metal corrosion rates and therefore cannot practically be used with most well and surface equipment. Further, solutions with densities in the 1680 kg/m$^3$ (14 lb/gal) range are not highly effective for deep well drilling. As a result of these limitations, these completion fluids did not receive strong acceptance in the oil and gas industry.

Other solids-free completion fluids have been better received. These fluids comprise calcium bromide, calcium chloride, and water and have densities up to 1810 kg/m$^3$ (15.1 lb/gal). See Plonka, "New Bromide Packer Fluids Cut Corrosive Problems", World Oil, April 1972, and Paul and Plonka "Solids-Free Completion Fluids Maintain Formation Permeability", SPE 4655, Las Vegas, September 30—October 3, 1973. Unlike the fluids in the '950 patent, calcium bromide/calcium chloride fluids have very low corrosion rates, which can be further reduced with the addition of suitable corrosion inhibitors. Density limitations (1810 kg/m$^3$ (15.1 lb/gal) limit) and high crystallization point temperatures 20°C (68°F) of the calcium bromide/calcium chloride fluids, however, have made these fluids less than ideal for use in completion operations. Therefore demands for other new solids-free completion fluids have continued.

Another new system of completion fluids in the density range of 1800 to 2300 kg/m$^3$ (15.0 to 19.2 lb/gal) was disclosed in 1981 in U.S. Patent No. 4,292,183, ("'183"). The '183 patent teaches mixtures of zinc bromide, calcium bromide, calcium chloride, and water which contain corrosion inhibitors capable of reducing the corrosion rate of mild steel coupons to less than 254 μmpy (10 mpy) at 121°C (250°F).

Although the introduction of these various new completion fluids have helped resolve many of the difficulties encountered in completion and workover operations, problems still remain. For example, use of completion fluids with significant zinc and calcium ion concentrations in subterranean wells containing carbonate or carbon dioxide result in precipitation of calcium and zinc carbonates. Further, it has been reported by Shaughnessy, et al. in "Workover Fluids for Prudhoe Bay", February—July 1977 that the mixing of calcium chloride workover fluids with formation brines under certain conditions (i.e., at a pressure of $3.5 \times 10^7$ N/m$^3$ (5000 psi) and a temperature of 104°C (220°F)) can lead to the precipitation of calcium carbonate within reservoir rock and, therefore, to formation damage. These problems have been partially resolved by utilizing sodium bromide completion and workover fluids in place of calcium ion containing solutions. However, sodium bromide solutions can only be used in shallow wells where high formation pressures are not encountered. Further, more recently, carbon dioxide or carbonate containing wells have been discovered which require drilling and completion fluids with fluid densities of at least 1680 to 2400 kg/m$^3$ (14—20 lb/gal), density ranges which are well above those of sodium bromide.

It is thus a primary object of the present invention to develop high density completion fluids that may be successfully used in sulfate and/or carbonate-containing wells, in the density range of 1380 to 2460 kg/m$^3$ (11.5 to 20.5 lb/gal).

It is a further object of the invention to develop high density completion fluids having pH values in the range of 1.0 to 7.5 for use in sulfate and/or carbonate containing wells.

An additional object of the invention is to develop high density calcium-free completion fluids for use in carbonate and/or sulfate containing wells which are economical.

Another object of the present invention is to develop high/density calcium-free completion fluids which may also contain corrosion inhibitors and viscosifying agents for downhole applications.

Further objects and uses of the present invention will also be obvious from the following disclosure.

The foregoing objects, advantages and features of this invention may be achieved with high-density calcium-free fluids adapted for use as completion, packing, and perforation media in well formations having high carbonate and/or sulfate concentrations, comprising an aqueous solution of 2 up to 56 percent by weight zinc bromide and 14 up to 54 percent by weight of at least one member selected from the group consisting of lithium bromide, sodium bromide, potassium bromide and mixtures of sodium bromide and potassium bromide, the solution having a density lying in the range of 1380 to 2460 kg/$m^3$ (11.5 to 20.5 lb/gal) and a pH lying in the range of 1.0 to 7.5.

These solutions may also contain corrosion inhibitors to provide a non-corrosive environment for downhole applications, and viscosifiers for more effective use.

In its method aspect, the present invention involves injecting a high density calcium-free fluid of the invention into wells having a high carbonate and/or sulfate ion concentration.

The novelty of the fluids of this invention is that, contrary to the expectations of those skilled in the art, solutions obtained by substituting one or more selected alkali metal bromides for calcium bromide in zinc bromide/calcium bromide fluids may be used without precipitation of zinc salts when application to carbonate and/or sulfate containing formation brines.

The abbreviation "gal" used herein means "gallon" (i.e. "U.S. gallon"). The abbreviation "bbl" used herein means "barrel", one barrel being 42 U.S. gallons. The abbreviations "mpy" and "μmpy" used herein means "mils per year" and "micrometres per year", respectively.

Calcium-free solutions for use as completions fluids in oil and gas formations containing high carbonate and/or sulfate ion concentrations have been prepared. These solutions comprise mixtures of zinc bromide and one or more selected alkali metal bromides and water and have densities in the range of 1380 to 2460 kg/$m^3$ (11.5 to 20.5 lb/gal), preferably 1380 to 2300 kg/$m^3$ (11.5—19.2 lb/gal), and pH values of 1.0 to 7.5, preferably 2.5 to 5.5.

Alkali metal bromides which are used in accordance with this invention are sodium bromide, potassium bromide, and lithium bromide. Mixtures of sodium and potassium bromides may also be employed.

The relative concentrations or amounts of the different salt constituents used in these completion fluids are 2—56% zinc bromide and 14—54% alkali metal bromide(s) by weight of the overall compositions.

In the case of the zinc bromide/sodium bromide fluids, the densities lie in the range of 1500 to 2300 kg/$m^3$ (12.5 to 19.2 lb/gal). Density of zinc bromide/potassium bromide fluids lie in the range of 1380 to 2300 kg/$m^3$ (11.5 to 19.2 lb/gal). Zinc bromide/lithium bromide fluids have densities lying the range of 1620 to 2160 kg/$m^3$ (13.5 to 18.0 lb/gal), and fluids composed of zinc bromide/sodium bromide/potassium bromide have densities of 1560 to 2160 kg/$m^3$ (13.0 to 18.0 lb/gal).

The calcium free solutions of the present invention may be prepared by mixing a zinc bromide/alkali metal bromide base fluid with one or more monovalent alkali metal bromide solutions. The zinc bromide/alkali metal bromide base fluids may be prepared by combining solid zinc bromide and water with a solid alkali metal bromide or an aqueous solution thereof. The zinc bromide/alkali metal bromide base fluids may also be prepared by dissolving dry alkali metal bromide(s) in aqueous zinc bromide solutions. For example, a 2100 kg/$m^3$ (17.5 lb/gal) $ZnBr_2$/NaBr base fluid is prepared by adding 14.8 g water to 60.8 g 77 wt.% $ZnBr_2$ solution, and then dissolving 24.4 g 97% NaBr in the resulting solution to prepare 100 g fluid. Different $ZnBr_2$/NaBr blends in the density range of 1560 to 2100 kg/$m^3$ (13.0—17.5 lb/gal) may be prepared by mixing appropriate volumes of 2100 kg/$m^3$ (17.5 lb/gal) $ZnBr_2$/NaBr base fluid with 1500 kg/$m^3$ (12.5 lb/gal) NaBr (46.0 wt.% NaBr in water).

Corrosion inhibitors such as thioglycolates and thiocyanates which effectively control corrosion rates of mild steel may also be added to the completion fluids of the present invention to control corrosion of downhole equipment. The reason for the use of corrosion inhibitors is that completion fluids which contain zinc bromide are more corrosive than fluids formulated with alkali and alkaline earth metal bromides (i.e., LiBr, NaBr, KBr and $CaBr_2$). Therefore corrosion inhibitors are generally used when zinc bromide is present. British Patent, GB 2 027 687, and German Patent, Ger. offen. DE 3 316 677 All, disclose the use of various corrosion inhibitors, such as thioglycolates and thiocyanates, in zinc containing fluids. Suitable corrosion inhibitors which are capable of assisting in the control of corrosion with the calcium-free fluids of this invention include alkali metal and ammonium thiocyanates and thioglycolates, calcium thioglycolate and mixtures thereof. In addition, especially preferred corrosion inhibitors for use in the solutions of this invention, most especially those containing 50 wt.% $ZnBr_2$ or more, are disclosed in copending United States Patent Application Serial No. 913,409, filed September 30, 1986. The corrosion inhibitors in accordance with the Serial No. 913,409 application include calcium thiocyanate and a mixture of sodium thiocyanate, ammonium thioglycolate, and sodium isoascorbate.

Viscosifiers may also be added to the completion fluids of the present invention to help increase these fluids' ability to suspend and remove cuttings from the well and to prevent significant loss of fluids to the formation. Natural polymers such as guar gum, xanthan gum, and hydroxyethyl cellulose ("HEC") may be used as viscosifier additives in drilling and completion fluids. Only HEC has been used extensively as a viscosifier for drilling and completion fluids in the density range of 10 to 19.2 lb/gal. HEC polymer, solvated with ethylene glycol or suspended in mineral oil, has been used to viscosify aqueous NaBr, $CaCl_2$, $CaBr_2$, and $ZnBr_2$ brines in the density range of 1200 to 1800 kg/m$^3$ (10.0 to 15.0 lb/gal) and from 1980 to 2300 kg/m$^3$ (16.5 to 19.2 lb/gal). This viscosifier however fails to viscosify zinc ion-containing fluids in the density range of 1800 to 1980 kg/m$^3$ (15.0 to 16.5 lb/gal). This failure is believed to be due to the structural changes of solvent and solute caused by the different concentration ratio of halogen to zinc ion. An especially preferred viscosifier system is disclosed in United States Patent Application Serial No. 913,415, filed September 29, 1986.

The following Examples are provided for the purpose of further illustration of the preferred embodiment of the present invention and are not intended to be limitations on the disclosed invention.

Example I

Tables 1 through 6, present the weight percents ("wt.%") of the various salt constituents used in preparing drilling and completion fluids having densities in the range of 1380 to 2300 kg/m$^3$ (11.5 to 19.2 lb/gal). The specific gravity of these fluids is also given.

TABLE 1
Zinc bromide/lithium bromide fluid
density, specific gravity, and weight percent

| Density at 21.1°C (70°F) kg/m$^3$ (lb/gal) | Sp.Gr. | $ZnBr_2$ wt.% | LiBr wt.% |
|---|---|---|---|
| 1620 (13.5) | 1.62 | 2.2 | 52.4 |
| 1650 (13.8) | 1.66 | 7.0 | 49.0 |
| 1690 (14.1) | 1.69 | 11.5 | 45.7 |
| 1730 (14.4) | 1.73 | 14.5 | 43.6 |
| 1760 (14.7) | 1.77 | 20.2 | 39.5 |
| 1800 (15.0) | 1.80 | 24.1 | 36.7 |
| 1830 (15.3) | 1.84 | 28.0 | 34.0 |
| 1870 (15.6) | 1.87 | 31.7 | 31.2 |
| 1910 (15.9) | 1.91 | 35.2 | 28.8 |
| 1940 (16.2) | 1.95 | 38.7 | 26.3 |
| 1980 (16.5) | 1.98 | 42.0 | 23.9 |
| 2010 (16.8) | 2.02 | 45.2 | 21.6 |
| 2050 (17.1) | 2.05 | 48.2 | 19.4 |
| 2080 (17.4) | 2.09 | 51.2 | 17.3 |
| 2120 (17.7) | 2.13 | 54.0 | 15.3 |
| 2160 (18.0) | 2.16 | 54.8 | 14.7 |

TABLE 2
Zinc bromide/sodium bromide fluid
density, specific gravity, and weight percent

| Density at 21.1°C (70°F) $kg/m^3$ (lb/gal) | Sp.Gr. | $ZnBr_2$ wt.% | NaBr wt.% |
|---|---|---|---|
| 1560 (13.0) | 1.56 | 6.3 | 43.0 |
| 1620 (13.5) | 1.62 | 12.1 | 40.2 |
| 1680 (14.0) | 1.68 | 17.6 | 37.6 |
| 1740 (14.5) | 1.74 | 22.6 | 35.2 |
| 1800 (15.0) | 1.80 | 27.3 | 33.0 |
| 1860 (15.5) | 1.86 | 31.7 | 30.9 |
| 1920 (16.0) | 1.92 | 35.9 | 28.9 |
| 1980 (16.5) | 1.98 | 39.7 | 27.1 |
| 2040 (17.0) | 2.04 | 43.4 | 25.3 |
| 2100 (17.5) | 2.10 | 46.8 | 23.7 |

TABLE 3
Zinc bromide/potassium bromide fluid
density, specific gravity, and weight percent

| Density at 21.1°C (70°F) $kg/m^3$ (lb/gal) | Sp.Gr. | $ZnBr_2$ wt.% | KBr wt.% |
|---|---|---|---|
| 1380 (11.5) | 1.38 | 2.6 | 37.5 |
| 1440 (12.0) | 1.44 | 8.7 | 35.3 |
| 1500 (12.5) | 1.50 | 14.4 | 33.1 |
| 1560 (13.0) | 1.56 | 19.7 | 31.1 |
| 1620 (13.5) | 1.62 | 24.5 | 29.2 |
| 1680 (14.0) | 1.68 | 29.4 | 27.3 |
| 1740 (14.5) | 1.74 | 33.2 | 25.9 |
| 1800 (15.0) | 1.80 | 37.1 | 24.4 |
| 1860 (15.5) | 1.86 | 40.8 | 23.0 |
| 1920 (16.0) | 1.92 | 44.2 | 21.7 |
| 1980 (16.5) | 1.98 | 47.4 | 20.5 |
| 2040 (17.0) | 2.04 | 50.5 | 19.3 |
| 2100 (17.5) | 2.10 | 53.3 | 18.2 |
| 2160 (18.0) | 2.16 | 56.0 | 17.2 |

TABLE 4
Zinc bromide/sodium bromide/potassium bromide fluid density, specific gravity, and weight percent

| Density at 21.1°C (70°F) $kg/m^3$ (lb/gal) | Sp.Gr. | $ZnBr_2$ wt.% | KBr wt.% | NaBr wt.% |
|---|---|---|---|---|
| 1560 (13.0) | 1.56 | 7.1 | 2.2 | 40.0 |
| 1620 (13.5) | 1.62 | 13.6 | 4.2 | 34.7 |
| 1680 (14.0) | 1.68 | 19.7 | 6.0 | 29.7 |
| 1740 (14.5) | 1.74 | 25.3 | 7.8 | 25.1 |
| 1800 (15.0) | 1.80 | 30.6 | 9.4 | 20.8 |
| 1860 (15.5) | 1.86 | 35.5 | 10.9 | 16.8 |
| 1920 (16.0) | 1.92 | 40.1 | 12.3 | 13.0 |
| 1980 (16.5) | 1.98 | 44.4 | 13.6 | 9.5 |
| 2040 (17.0) | 2.04 | 48.5 | 14.9 | 6.1 |
| 2100 (17.5) | 2.10 | 52.4 | 16.1 | 3.0 |
| 2160 (18.0) | 2.16 | 56.0 | 17.2 | 0.0 |

TABLE 5
Zinc bromide/potassium bromide fluid density, specific gravity and weight percent

| Density at 21.1°C (70°F) kg/$m^3$ (lb/gal) | Sp.Gr. | $ZnBr_2$ wt.% | KBr wt.% |
|---|---|---|---|
| 1380 (11.5) | 1.38 | 3.0 | 37.0 |
| 1440 (12.0) | 1.44 | 10.0 | 33.5 |
| 1500 (12.5) | 1.50 | 16.5 | 30.3 |
| 1560 (13.0) | 1.56 | 22.5 | 27.3 |
| 1620 (13.5) | 1.62 | 28.0 | 24.3 |
| 1680 (14.0) | 1.68 | 33.1 | 21.9 |
| 1740 (14.5) | 1.74 | 37.9 | 19.5 |
| 1800 (15.0) | 1.80 | 42.3 | 17.3 |
| 1860 (15.5) | 1.86 | 42.5 | 20.0 |
| 1920 (16.0) | 1.92 | 42.7 | 22.5 |
| 1980 (16.5) | 1.98 | 42.9 | 24.9 |
| 2040 (17.0) | 2.04 | 43.1 | 27.1 |
| 2100 (17.5) | 2.10 | 43.3 | 29.3 |
| 2160 (18.0) | 2.16 | 43.4 | 31.2 |
| 2220 (18.5) | 2.22 | 43.6 | 33.1 |
| 2280 (19.0) | 2.28 | 43.7 | 34.9 |
| 2300 (19.2) | 2.31 | 43.8 | 35.6 |

TABLE 6
Zinc bromide/potassium bromide fluid density, specific gravity and weight percent

| Density at 21.1°C (70°F) $kg/m^3$ (lb/gal) | Sp.Gr. | $ZnBr_2$ wt.% | KBr wt.% |
|---|---|---|---|
| 1560 (13.0) | 1.56 | 7.7 | 41.4 |
| 1620 (13.5) | 1.62 | 14.9 | 37.1 |
| 1680 (14.0) | 1.68 | 21.5 | 33.2 |
| 1740 (14.5) | 1.74 | 27.7 | 29.5 |
| 1800 (15.0) | 1.80 | 33.5 | 26.0 |
| 1860 (15.5) | 1.86 | 35.1 | 27.3 |
| 1920 (16.0) | 1.92 | 36.5 | 28.5 |
| 1980 (16.5) | 1.98 | 37.9 | 29.6 |
| 2040 (17.0) | 2.04 | 39.2 | 30.7 |
| 2100 (17.5) | 2.10 | 40.4 | 31.7 |
| 2160 (18.0) | 2.16 | 41.5 | 32.6 |
| 2220 (18.5) | 2.22 | 42.6 | 33.5 |
| 2280 (19.0) | 2.28 | 43.6 | 34.4 |
| 2300 (19.2) | 2.31 | 44.0 | 34.7 |

All of the calcium-free fluids in the density range of 1380 to 2300 $kg/m^3$ (11.5 to 19.2 lb/gal) described above may be prepared by mixing a two salt base fluid (e.g., 2160 $kg/m^3$ (18.0 lb/gal) $ZnBr_2$/KBr or 2100 $kg/m^3$ (17.5 lb/gal) $ZnBr_2$/NaBr) with single- or two-salt solutions having a lower density than the base fluid (e.g., 1500 $kg/m^3$ (12.5 lb/gal) NaBr or 1800 $kg/m^3$ (15.0 lb/gal) $ZnBr_2$/KBr). These fluids may also be formulated by mixing solutions of $ZnBr_2$ and LiBr, NaBr, or KBr and dry salts (e.g., 77 wt.% $ZnBr_2$, 54 wt.% LiBr, 46 wt.% NaBr, 38.5 wt.% KBr, and dry salts).

Example II

A NaBr solution having a density of 12.5 lb/gal was prepared by mixing 46.0 wt.% solid NaBr and 54.0 wt.% water. A $ZnBr_2$/NaBr base fluid having a density of 17.5 lb/gal was prepared by combining 46.8 wt.% solid $ZnBr_2$, 23.7 wt.% solid NaBr, and 29.5 wt.% water. Varying amounts of $ZnBr_2$/NaBr base fluid (density, 2100 $kg/m^3$ (17.5 lb/gal)) were then mixed with different amounts of NaBr solution (density 1500 $kg/m^3$ (12.5 lb/gal)) in order to prepare different completion fluids in the density range of 1560 to 2100 $kg/m^3$ (13.0 to 17.5 lb/gal). The volumes of the base fluid and NaBr solution required to formulate these different completion fluids, along with the respective densities and thermodynamic crystallization temperatures of the completion fluids, are given in Table 7.

TABLE 7
Blending procedure—$ZnBr_2$/NaBr fluid
using 2100 kg/m$^3$ (17.5 lb/gal) $ZnBr_2$/NaBr and 1500 kg/m$^3$ (12.5 lb/gal) NaBr

| Density at 21.1°C (70°F) kg/m$^3$ (lb/gal) | $ZnBr_2$/NaBr | | NaBr | | Cryst. Pt. (TCP) | |
|---|---|---|---|---|---|---|
| | m$^3$ | (bbl) | m$^3$ | (bbl) | °C | (°F) |
| 1500 (12.5) | 0.0000 | (0.000) | 1.0000 | (1.000) | −6.1 | (21) |
| 1560 (13.0) | 0.0159 | (0.100) | 0.1431 | (0.900) | −7.8 | (18) |
| 1620 (13.5) | 0.0318 | (0.200) | 0.1272 | (0.800) | −9.4 | (15) |
| 1680 (14.0) | 0.0477 | (0.300) | 0.1113 | (0.700) | −12.2 | (10) |
| 1740 (14.5) | 0.0636 | (0.400) | 0.0954 | (0.600) | −17.2 | (1) |
| 1800 (15.0) | 0.0795 | (0.500) | 0.0795 | (0.500) | −26.7 | (−16) |
| 1860 (15.5) | 0.0954 | (0.600) | 0.0636 | (0.400) | −19.4 | (−3) |
| 1920 (16.0) | 0.1113 | (0.700) | 0.0477 | (0.300) | −12.8 | (9) |
| 1980 (16.5) | 0.1272 | (0.800) | 0.0318 | (0.200) | −5 | (23) |
| 2040 (17.0) | 0.1431 | (0.900) | 0.0159 | (0.100) | −2.8 | (37) |
| 2100 (17.5) | 1.0000 | (1.000) | 0.0000 | (0.000) | 8.3 | (47) |

The low pH and relatively low concentrations of the divalent salt in these fluids (compared with $ZnBr_2$/$CaBr_2$/$CaCl_2$ fluids) make them particularly suitable for use in formations with high carbonate and/or high sulfate concentrations.

Example III

Another calcium-free completion fluid was prepared by mixing a $ZnBr_2$/LiBr base fluid with a LiBr solution. The 2160 kg/m$^3$ (18.0 lb/gal) $ZnBr_2$/LiBr base fluid was prepared by combining an appropriate volume of aqueous 77 wt.% $ZnBr_2$ solution (density, 2430 kg/m$^3$ (20.3 lb/gal)) with the requisite amount of aqueous 54 wt.% LiBr solution (density, 1610 kg/m$^3$ (13.4 lb/gal)). Different $ZnBr_2$/LiBr fluids with densities in the range of 1680 to 2160 kg/m$^3$ (14.0 to 18.0 lb/gal) were then formulated by combining varying amounts of the 2160 kg/m$^3$ (18.0 lb/gal) $ZnBr_2$/LiBr base fluid with different volumes of the aqueous 1610 kg/m$^3$ (13.4 lb/gal) LiBr solution. Table 8 provides the different volumes of base fluid and LiBr solution required to formulate these completion fluids and the thermodynamic crystallization temperatures of the fluids.

TABLE 8
Mixing procedure—$ZnBr_2$/LiBr fluid
using 2160 kg/m$^3$ (18.0 lb/gal) $ZnBr_2$/LiBr and 1610 kg/m$^3$ (13.4 lb/gal) LiBr

| Density at 21.1°C (70°F) kg/m$^3$ (lb/gal) | Composition for 0.1590 m$^3$ (1 bbl) (42 gal) | | |
|---|---|---|---|
| | $ZnBr_2$/LiBr m$^3$ (bbl) | LiBr m$^3$ (bbl) | Cryst. Pt. (TCP) |
| 1620 (13.5) | 0.0048 (0.030) | 0.1526 (0.960 | ↑ |
| 1650 (13.8) | 0.0154 (0.097) | 0.1420 (0.893) | |
| 1690 (14.1) | 0.0261 (0.164) | 0.1313 (0.826) | |
| 1730 (14.4) | 0.0332 (0.209) | 0.1242 (0.781) | |
| 1760 (14.7) | 0.0474 (0.298) | 0.1092 (0.687) | |
| 1800 (15.0) | 0.0576 (0.362) | 0.0983 (0.618) | −51.1°C (−60°F) |
| 1830 (15.3) | 0.0680 (0.428) | 0.0878 (0.552) | |
| 1870 (15.6) | 0.0789 (0.496) | 0.0770 (0.484) | |
| 1910 (15.9) | 0.0886 (0.557) | 0.0665 (0.418) | |
| 1940 (16.2) | 0.0994 (0.625) | 0.0556 (0.350) | |
| 1980 (16.5) | 0.1099 (0.691) | 0.0452 (0.284) | |
| 2010 (16.8) | 0.1207 (0.759) | 0.0343 (0.216) | |
| 2050 (17.1) | 0.1304 (0.820) | 0.0239 (0.150) | |
| 2090 (17.4) | 0.1415 (0.890) | 0.0135 (0.085) | |
| 2120 (17.7) | 0.1520 (0.956) | 0.0030 (0.019) | |
| 2160 (18.0) | 1.0000 (1.000) | 0.0000 (0.000) | ↓ |

Example IV

A different calcium free completion fluid, $ZnBr_2$/KBr, was prepared in two ways. The 2160 kg/m$^3$ (18.0 lb/gal) base fluid was prepared by combining the appropriate amount of the aqueous 77 wt.% $ZnBr_2$ solution with the requisite volume of the aqueous 38.5 wt.% KBr solution (density, 1350 kg/m$^3$ (11.3 lb/gal)). This method of preparation was not preferred however because of the low density (i.e., 1350 kg/m$^3$ (11.3 lb/gal)) of the aqueous 38.5 wt.% KBr solution. Mixing of the low density KBr solution with the $ZnBr_2$ solution resulted in a base fluid with an inordinately high $ZnBr_2$ concentration. The preferred method was to dilute the aqueous 77 wt.% $ZnBr_2$ with water and then add the required weight of solid KBr to achieve a 2160 kg/m$^3$ (18.0 lb/gal) base fluid. This base fluid can then be mixed with the 1350 kg/m$^3$ (11.3 lb/gal) aqueous KBr solution to prepare different completion fluids having densities in the range of 1380 to 2160 kg/m$^3$ (11.5 to 18.0 lb/gal). Table 9 presents the various mixtures of base fluids and KBr solutions used to make the completion fluids of Example IV along with the thermodynamic crystallization temperatures for these completion fluids.

TABLE 9
Blending procedure—$ZnBr_2$/KBr fluid
using 2160 kg/$m^3$ (18.0 lb/gal)$ZnBr_2$/KBr and 1350/kg/$m^3$ (11.3 lb/gal) KBR
Composition for 0.1590 $m^3$ (1 bbl) (42 gal)

| Density at 21.1°C (70°F) kg/$m^3$ (lb/gal) | $ZnBr_2$/KBr $m^3$ (bbl) | KBr $m^3$ (bbl) | Cryst. Pt. (TCP) °C (°F) |
|---|---|---|---|
| 1440 (12.0) | 0.0166 (0.104) | 0.1425 (0.896) | −14.4 (6) |
| 1500 (12.5) | 0.0285 (0.179) | 0.1305 (0.821) | |
| 1560 (13.0) | 0.0404 (0.254) | 0.1186 (0.746) | −22.2 (−8) |
| 1620 (13.5) | 0.0521 (0.328) | 0.1068 (0.672) | |
| 1680 (14.0) | 0.0641 (0.403) | 0.0921 (0.579) | −24.4 (−12) |
| 1470 (14.5) | 0.0760 (0.478) | 0.0830 (0.522) | |
| 1800 (15.0) | 0.0878 (0.552) | 0.0712 (0.448) | |
| 1860 (15.5) | 0.0997 (0.627) | 0.0593 (0.373) | −37.2 (−35) |
| 1920 (16.0) | 0.1114 (0.701) | 0.0475 (0.299) | |
| 1980 (16.5) | 0.1234 (0.776) | 0.0356 (0.224) | −53.3 (−64) |
| 2040 (17.0) | 0.1353 (0.851) | 0.0237 (0.149) | |
| 2100 (17.5) | 0.1471 (0.925) | 0.0119 (0.075) | −30.6 (−23) |
| 2160 (18.0) | 1.0000 (1.000) | 0.0000 (0.000) | |

Because of their low crystallization temperatures, namely −14.4 to −53.3°C (6 to −64°F), these completion fluids can be used during the winter months without danger of solidification.

Example V

Another calcium-free fluid may be prepared by dissolving $ZnBr_2$, NaBr, and KBr salts in water. As an example of the numerous ways of preparing completion fluids, a 2160 kg/$m^3$ (18.0 lb/gal) $ZnBr_2$/KBr base fluid (prepared according to Example IV) was mixed with an aqueous solution of NaBr having a density 1500 kg/$m^3$ (12.5 lb/gal) to formulate $ZnBr_2$/NaBr/KBr fluids having densities in the range of 1620 to 2160 kg/$m^3$ (13.0 to 18.0 lb/gal). The various volumes of the base fluid and NaBr solution used in these completion fluids are given in Table 10.

TABLE 10
Blending procedure—$ZnBr_2$/KBr/NaBr fluid
using 2160 kg/$m^3$ (18.0 lb/gal) $ZnBr_2$/KBr and 1500 kg/$m^3$ (12.5 lb/gal) NaBr
Composition for 0.1590 $m^3$ (1/bbl) (42 gal)

| Density at 21.1°C (70°F) kg/$m^3$ (lb/gal) | $ZnBr_2$/KBr $m^3$ (bbl) | NaBr $m^3$ (bbl) |
|---|---|---|
| 1560 (13.0) | 0.0145 (0.091) | 0.1445 (0.909) |
| 1620 (13.5) | 0.0290 (0.182) | 0.1300 (0.818) |
| 1680 (14.0) | 0.0434 (0.273) | 0.1156 (0.727) |
| 1740 (14.5) | 0.0579 (0.364) | 0.1011 (0.636) |
| 1800 (15.0) | 0.0723 (0.455) | 0.0866 (0.545) |
| 1860 (15.5) | 0.0868 (0.546) | 0.0722 (0.454) |
| 1920 (16.0) | 0.1011 (0.636) | 0.0579 (0.364) |
| 1980 (16.5) | 0.1156 (0.727) | 0.0434 (0.273) |
| 2040 (17.0) | 0.1300 (0.818) | 0.0290 (0.182) |
| 2100 (17.5) | 0.1445 (0.909) | 0.0145 (0.091) |
| 2160 (18.0) | 1.0000 (1.000) | 0.0000 (0.000) |

Example VI

Calcium-free completion fluids having densities greater than 2160 kg/$m^3$ (18.0 lb/gal) may be prepared by dissolving a greater amount of solid monovalent salt (i.e., NaBr, KBr, or LiBr) into the base fluids than in the previous examples. For example, a 2460 kg/$m^3$ (20.5 lb/gal) $ZnBr_2$/NaBr completion fluid was prepared by dissolving solid NaBr in a 2100 kg/$m^3$ (17.5 lb/gal) $ZnBr_2$/NaBr base fluid. It has also been discovered that 2300/kg/$m^3$ (19.2 lb/gal) calcium-free base fluids having low composition of $ZnBr_2$ (42—44 wt.%) by dissolving solid monovalent salt into the zinc bromide solution. Owing to the high composition of monovalent salt in these base fluids, if they are blended down with lower density base fluids (i.e. 1350 kg/$m^3$ (11.3 lb/gal) KBr, 1500 kg/$m^3$ (12.5 lb/gal) NaBr, or 1610 kg/$m^3$ (13.4 lb/gal) LiBr), solid monovalent salt will precipitate out of the solution (salting out). The problem was resolved by formulating an intermediate density base fluid (1800 kg/$m^3$ (15.0 lb/gal)) by blending the 77 wt.% $ZnBr_2$ solution with the lower density base fluids. These new base fluids were then used with 2300 kg/$m^3$ (19.2 lb/gal) fluids to blend up and with lower density base fluids to blend down.

The composition of $ZnBr_2$ in the new 2300 kg/$m^3$ (19.2 lb/gal) base fluids is about 42.0—44.0 wt.%. Because of lower concentrations of $ZnBr_2$/KBr in these base fluids compared with those used in Examples I—V, they are less corrosive to metal equipment than the base fluids used in the previous examples.

Example VII

A 2300 kg/$m^3$ (19.2 lb/gal) $ZnBr_2$/KBr base fluid was prepared by adding 7.1 g water to 56.9 g 77 wt.% $ZnBr_2$ and then dissolving 36.0 solid 99 wt.% KBr into the resulting solution. The composition of this fluid is therefore 43.8 wt.% $ZnBr_2$/KBr, 35.6 wt.% KBr and 20.6 wt.% water.

A 1800 kg/$m^3$ (15.0 lb/gal) $ZnBr_2$/KBr base fluid was prepared by mixing 140.7 ml of 77 wt.% $ZnBr_2$ solution (d=2430 kg/$m^3$ (20.3 lb/gal)) with 209.8 ml of 38.5 wt.% KBr solution (d=1350 kg/$m^3$ (11.3 lb/gal)). The resulting fluid contained 42.3 wt.% $ZnBr_2$, 17.3 wt.% KBr and 40.4 wt.% water.

Tables 11 and 12 present the blending procedures for $ZnBr_2$/KBr fluids using 2300 kg/$m^3$ (19.2 lb/gal) $ZnBr_2$/KBr, 1800 kg/$m^3$ (15.0 lb/gal) $ZnBr_2$/KBr and 1350 kg/$m^3$ (11.3 lb/gal) KBr. The thermodynamic cristallization temperatures are also given in Tables 11 and 12.

TABLE 11
Blending procedure for $ZnBr_2$/KBr fluid
using 1800 kg/$m^3$ (15.0 lb/gal) $ZnBr_2$/KBr and 1350 kg/$m^3$ (11.3 lb/gal) KBr

| Density at 21.1°C (70°F) kg/$m^3$ (lb/gal) | 1800 kg/$m^3$ (15.0 lb/gal) $ZnBr_2$/KBr $m^3$ (bbl) | 1350 kg/$m^3$ (11.3 lb/gal) KBr $m^3$ (bbl) | Cryst. Pt. (TCP) °C (°F) |
|---|---|---|---|
| 1380 (11.5) | 0.0086 (0.054) | 0.1504 (0.946) | |
| 1440 (12.0) | 0.0300 (0.189) | 0.1290 (0.811) | −14 (6.8) |
| 1500 (12.5) | 0.0515 (0.324) | 0.1075 (0.676) | |
| 1560 (13.0) | 0.0731 (0.460) | 0.0856 (0.540) | −18 (−0.4) |
| 1620 (13.5) | 0.0946 (0.595) | 0.0644 (0.405) | |
| 1680 (14.0) | 0.1161 (0.730) | 0.0430 (0.270) | −24.2 (−11.6) |
| 1740 (14.5) | 0.1375 (0.865) | 0.0215 (0.135) | |
| 1800 (15.0) | 1.0000 (1.000) | 0.0000 (0.000) | −37.8 (−36.0) |

TABLE 12
Blending procedure for $ZnBr_2$/KBr fluid
using 2300 kg/$m^3$ (19.2 lb/gal) and 1800/kg/$m^3$ (15.0 lb/gal) $ZnBr_2$/KBr

| Density at 21.1°C (70°F) kg/$m^3$ (lb/gal) | 2300 kg/$m^3$ (19.2 lb/gal) $m^3$ (bbl) | 1800 kg/$m^3$ (15.0 lb/gal) $m^3$ (bbl) | Cryst. Pt. (TCP) °C (°F) |
|---|---|---|---|
| 1860 (15.5) | 0.0190 (0.119) | 0.1401 (0.881) | |
| 1920 (16.0) | 0.0378 (0.238) | 0.1211 (0.762) | −33.3 (−27.9) |
| 1980 (16.5) | 0.0568 (0.357) | 0.1022 (0.643) | |
| 2040 (17.0) | 0.0757 (0.476) | 0.0833 (0.524) | −4.2 (−24.5) |
| 2100 (17.5) | 0.0946 (0.595) | 0.0644 (0.405) | |
| 2160 (18.0) | 0.1135 (0.714) | 0.0455 (0.286) | −24.8 (−12.6) |
| 2220 (18.5) | 0.1324 (0.833) | 0.0266 (0.167) | |
| 2280 (19.0) | 0.1514 (0.952) | 0.0076 (0.048) | |
| 2300 (19.2) | 1.0000 (1.000) | 0.0000 (0.000) | −16.1 (3.0) |

Example VIII

A 2300 kg/$m^3$ (19.2 lb/gal) $ZnBr_2$/NaBr base fluid was prepared by adding 8.2 g water to 57.1 g 77 wt.% $ZnBr_2$ solution and then dissolving 34.7 g (97 wt.% dry NaBr into the resulting solution. The composition of this fluid was therefore 44.0 wt.% $ZnBr_2$, 34.7 wt.% NaBr and 21.3 wt.% water. Another zinc bromide/sodium bromide base fluid (1800 kg/$m^3$ (15.0 lb/gal)) was prepared by mixing 112.4 ml of 77 wt.% $ZnBr_2$ solution (d=2430 kg/$m^3$ (20.3 lb/gal)) with 237.6 ml of 46.0 wt.% NaBr solution (d=1500 kg/$m^3$ (12.5 lb/gal)). The resulting fluid contained 33.5 wt.% $ZnBr_2$, 26.0 wt.% NaBr and 40.5 wt.% water.

Tables 13 and 14 present the blending procedures for $ZnBr_2$/NaBr fluids using 2300 kg/$m^3$ (19.2 lb/gal) and 1800 kg/$m^3$ (15.0 lb/gal) $ZnBr_2$/NaBr, and 1500 kg/$m^3$ (12.5 lb/gal) NaBr. The thermodynamic crystallization temperatures for these fluids are also given in Tables 13 and 14.

TABLE 13
Blending procedure for $ZnBr_2$/NaBr fluid
using 1800 kg/$m^3$ (15.0 lb/gal) $ZnBr_2$/NaBr and 1500 kg/$m^3$ (12.5 lb/gal) NaBr

| Density at 21.1°C (70°F) kg/$m^3$ (lb/gal) | 1800 kg/$m^3$ (15.0 lb/gal) $ZnBr_2$/NaBr $m^3$ (bbl) | 1500 kg/$m^3$ (12.5 lb/gal) NaBr $m^3$ (bbl) | Cryst. Pt. (TCP) °C (°F) |
|---|---|---|---|
| 1560 (13.0) | 0.0318 (0.200) | 0.1272 (0.800) | −14.7 (5.6) |
| 1620 (13.5) | 0.0636 (0.400) | 0.0954 (0.600) | |
| 1680 (14.0) | 0.0954 (0.600) | 0.0636 (0.400) | −37.4 (−35.3) |
| 1740 (14.5) | 0.1272 (0.800) | 0.0318 (0.200) | |
| 1800 (15.0) | 1.0000 (1.000) | 0.0000 (0.000) | −33.2 (−27.7) |

TABLE 14
Blending procedure for $ZnBr_2$/NaBr fluid
using 2300 kg/$m^3$ (19.2 lb/gal) and 1800 kg/$m^3$ (15.0 lb/gal) $ZnBr_2$/NaBr

| Density at 21.1°C (70°F) kg/$m^3$ (lb/gal) | 2300 kg/$m^3$ (19.2 lb/gal) $m^3$ (bbl) | 1800 kg/$m^3$ (15.0 lb/gal) $m^3$ (bbl) | Cryst. Pt. (TCP) °C (°F) |
|---|---|---|---|
| 1860 (15.5) | 0.0190 (0.119) | 0.1401 (0.881) | |
| 1920 (16.0) | 0.0378 (0.238) | 0.1211 (0.762) | −16.2 (2.8) |
| 1980 (16.5) | 0.0568 (0.357) | 0.1022 (0.643) | |
| 2040 (17.0) | 0.0757 (0.476) | 0.0833 (0.524) | −4.2 (24.4) |
| 2100 (17.5) | 0.0946 (0.595) | 0.0644 (0.405) | |
| 2160 (18.0) | 0.1135 (0.714) | 0.0455 (0.286) | 4.3 (39.7) |
| 2220 (18.5) | 0.1324 (0.833) | 0.0266 (0.167) | |
| 2280 (19.0) | 0.1514 (0.952) | 0.0076 (0.048) | |
| 2300 (19.2) | 1.0000 (1.000) | 0.0000 (0.000) | 9.2 (48.6) |

Formation damage experiments

Formation damage experiments have shown that, when 2160 kg/$m^3$ (18.0 lb/gal) $ZnBr_2$/KBr or 2100 kg/$m^3$ (17.5 lb/gal) $ZnBr_2$/NaBr completion fluids were mixed with a 2/8 ratio of formation brine having a high carbonate and/or high sulfate concentration, no precipitate was formed. However, when the same experiments were performed with a 2160 kg/$m^3$ (18.0 lb/gal) $ZnBr_2$/$CaBr_2$ completion fluid, a white precipitate was formed. In other experiments, 1740 kg/$m^3$, (14.5 lb/gal) $ZnBr_2$/NaBr and $ZnBr_2$/KBr completion fluids were mixed separately with a 3/7 ratio of formation brine and no precipitate was formed. However, when the same test was performed with a 1740 kg/$m^3$ (14.5 lb/gal) $ZnBr_2$/$CaBr_2$ completion fluid, a white precipitate was formed.

Considering the solubility products for calcium carbonate (i.e., $3.8\times10^{-9}$ at 25°C) and zinc carbonate (i.e., $2.1\times10^{-11}$ at 25°C), it would be expected that zinc carbonate and calcium carbonate would precipitate when $ZnBr_2$/NaBr or $ZnBr_2$/KBr completion fluids were mixed with formation brine. However, no precipitates formed with the solutions of this invention. The novelty of the present invention lies in the discovery that the substitution of either sodium bromide or potassium bromide for calcium bromide alters the expected reaction between zinc and carbonate ions such that no insoluble zinc carbonate precipitate is formed. Without being limited to the correctness of any particular theory this unusual effect may be due to a lower pH and a lower concentration of divalent metal ions in the calcium-free completion fluids than in

the standard $ZnBr_2/CaBr_2$ completion fluids. Another possible explanation is that zinc bromide, sodium bromide, potassium bromide and lithium bromide may form double salts in aqueous solution, preventing zinc carbonate precipitation. Still another possible explanation is the formation of complex ions between zinc ions and bromide ions, i.e., $ZnBr^+$, $ZnBr_3^-$, $ZnBr_4^=$ which may prevent the carbonate precipitation. Also, the reported solubility products for $CaCO_3$ and $ZnCO_3$ are those at infite dilution or when the activity coefficient of the ions involved approach unity. In the concentrated salt solutions of the present invention, the activity coefficients of calcium, zinc and carbonate ions may, due to high ionic strength, be different than unity, and hence the reported values for solubility products of $ZnCO_3$ and $CaCO_3$ cannot be used as a criteria for predicting the formation of precipitates. Whatever the explanation, it is clear that, most unexpectedly, the calcium-free fluids of this invention may quite successfully be employed with carbonate and sulfate containing formation brines without precipitation of insoluble zinc salts.

Viscosification experiments

The calcium-free completion fluids of the present invention can be easily viscosified with any HEC-based liquid viscosifier. Tables 15 and 17 presents the funnel viscosities and rheology data for different $ZnBr_2$/NaBr and $ZnBr_2$/KBr fluids viscosified with HEC-based liquid viscosifier.

TABLE 15
Funnel viscosity and rheology data
for calcium-free fluids ($ZnBr_2$/NaBr)
viscosified with 42.8 kg/m³ (15 lb/bbl) HEC-based liquid viscosifier
—one hour mixing—

| Fluid density at 21.1°C (70°F) kg/m³ (lb/gal) | Funnel viscosity (sec) | Fann RPM 600 | Fann RPM 300 | Apparent viscosity cp | Plastic viscosity cp | Yield point N/m² (lb/100 sqft) |
|---|---|---|---|---|---|---|
| 1800 (15.0) | 366 | 269 | 213 | 135 | 86 | 75.2 (157) |
| 1860 (15.5) | 419 | 285 | 230 | 143 | 55 | 83.8 (175) |
| 1920 (16.0) | 409 | OS | 241 | OS | OS | OS |
| 1980 (16.5) | 383 | OS | 240 | OS | OS | OS |
| 2100 (17.5) | 595 | OS | 279 | OS | OS | OS |
| 2280 (19.0) | 1195 | OS | OS | OS | OS | OS |

OS=off scale, greater than 143.6 N/m² (300 lb/100 sqft).

TABLE 16
Funnel viscosity and rheology data for calcium-free
fluids ($ZnBr_2$/KBr) viscosified with 42.8 kg/m³ (15 lb/bbl)
HEC-based liquid viscosifier

| Fluid density at 21.1°C (70°F) kg/m³ (lb/gal) | Funnel viscosity (sec) | Fann RPM 600 | Fann RPM 300 | Apparent viscosity cp | Plastic viscosity cp | Yield point N/m² (lb/100 sqft) |
|---|---|---|---|---|---|---|
| 1800 (15.0) | 210 | 226 | 183 | 113 | 43 | 67.0 (140) |
| 1860 (15.5) | 310 | 260 | 214 | 130 | 46 | 80.4 (168) |
| 1920 (16.0) | 350 | 259 | 207 | 130 | 52 | 74.2 (155) |
| 1980 (16.5) | 320 | 276 | 224 | 138 | 52 | 82.4 (172) |
| 2100 (17.5) | 605 | OS | 289 | OS | OS | OS |
| 2220 (18.5) | 530 | OS | 286 | OS | OS | OS |
| 2280 (19.0) | 471 | OS | 281 | OS | OS | OS |

OS=off-scale, greater than 143.6 N/m² (300 lb/sqft).

These data show that the 42.8 kg/m$^3$ (15 lb/bbl) HEC-based liquid viscosifier was effective as a viscosifier for zinc ion-containing fluids in the density range of 1860 to 2280 kg/m$^3$ (15.5 to 19.0 lb/gal). The funnel viscosity measurements, which cannot be manipulated mathematically, are presented with the measurements obtained from the viscometer for purposes of permitting comparison of these completion fluids fluid viscosities. A viscosified fluid used as a "pill" should exhibit a funnel viscosity of about 200 sec. The data in Tables 15 and 16 indicate that concentrations of 28.6 to 42.8 kg/m$^3$ (10 to 15 lb/bbl) of the HEC-based liquid viscosifier are sufficient to generated funnel viscosities of 200 sec.

Toxicity experiments

Toxicity data for the calcium-free fluids of the present invention indicates that these fluids may be safely employed. While zinc bromide solution has been found to be a primary eye irritant, neither zinc bromide nor any of the monovalent salt solutions (LiBr, NaBr, and KBr) has been considered primary skin irritants. $LD_{50}$ (i.e., the lethal dosage at which 50% of the test animals die) toxicity data are reported in the 1981—82 Registry of Toxic Effects of Chemical Substances from the United States Department of Health, Education and Welfare. See also Sax, Dangerous Properties of Industrial Mathematics, 6th ed., or the Merck Index, 10th ed.

Corrosion inhibition

Seven day corrosion rates were determined in a manner known to those skilled in the art for calcium-free completion fluids in accordance with this invention using thioglycolate/thiocyanate-based corrosion inhibitors. Specific corrosion inhibitors tested included a mixture of sodium thiocyanate, ammonium thioglycolate and sodium isoascorbate ("C.I.A."); calcium thiocyanate ("C.I.B."); and sodium thiocyanate ("C.I.C.").

TABLE 17
Seven day corrosion rates of mild steel coupons in calcium-free fluids

| Fluid density at 21.1°C (70°F) kg/m³ (lb/gal) | Temp. °C (°F) | Inhibitor | Corrosion rate µmpy (mpy) |
|---|---|---|---|
| 2160 (18.0)[a] $ZnBr_2$/KBr | 148.9 (300) | Blank | 15500 (610) |
| 2160 (18.0) $ZnBr_2$/KBr | 148.9 (300) | C.I.A. | 381 (15) |
| 2160 (18.0 $ZnBr_2$/KBr | 148.9 (300) | C.I.B. | 508 (20) |
| 2040 (17.0)[b] $ZnBr_2$/KBr | 176.7 (350) | Blank | 8890 (350) |
| 2040 (17.0) $ZnBr_2$/KBr | 176.7 (350) | C.I.A. | 178 (7) |
| 2100 (17.5)[c] $ZnBr_2$/NaBr | 148.9 (300) | Blank | 11600 (456) |
| 2100 (17.5 $ZnBr_2$/NaBr | 148.9 (300) | C.I.A. | 356 (14) |
| 2100 (17.5) $ZnBr_2$/NaBr | 148.9 (300) | C.I.B. | 483 (19) |
| 1740 (14.5) $ZnBr_2$/NaBr | 148.9 (300) | Blank | 1320 (52) |
| 1740 (14.5) $ZnBr_2$/NaBr | 148.9 (300) | C.I.A. | 203 (8) |
| 2280 (19.0)[d] $ZnBr_2$/KBr | 176.7 (350) | Blank | 2840 (112) |
| 2280 (19.0) $ZnBr_2$/KBr | 176.7 (350) | C.I.A. | 229 (9) |
| 2280 (19.0) $ZnBr_2$/KBr | 176.7 (350) | C.I.B. | 203 (8) |
| 2280 (19.0) $ZnBr_2$/KBr | 176.7 (350) | C.I.C. | 203 (8) |
| 2280 (19.0)[e] $ZnBr_2$/NaBr | 176.7 (350) | Blank | 1350 (53) |
| 2280 (19.0) $ZnBr_2$/NaBr | 176.7 (350) | C.I.A. | 152 (6) |
| 2280 (19.0) $ZnBr_2$/NaBr | 176.7 (350) | C.I.B. | 178 (7) |
| 2280 (19.0) $ZnBr_2$/NaBr | 176.7 (350) | C.I.C. | 229 (9) |

[a]56.2 wt.% $ZnBr_2$/17.3 wt.% KBr.
[b]50.3 wt.% $ZnBr_2$/19.4 wt.% KBr.
[c]52.0 wt.% $ZnBr_2$/18.0 wt.% NaBr.
[d]43.2 wt.% $ZnBr_2$/35.6 wt.% KBr.
[e]42.5 wt.% $ZnBr_2$/34.5 wt.% NaBr.

These data show that thioglycolate and thiocyanate group containing corrosion inhibitors act as effective corrosion inhibitors for zinc containing solutions of the present invention.

**Claims**

1. A clear, high-density calcium-free fluid adapted for use as well completion, packing and perforating media comprising an aqueous solution of 2 up to 56 percent by weight zinc bromide and 14 up to 54 percent by weight at least one member selected from the group consisting of lithium bromide, sodium bromide, potassium bromide and mixtures of sodium bromide and potassium bromide, the solution having a density lying in the range of 1380 to 2460 kg/m³ (11.5 to 20.5 pounds per gallon) and a pH lying in the range of 1.0 to 7.5.

2. A clear, calcium-free fluid, as claimed in claim 1, wherein the member is lithium bromide.

3. A clear, calcium-free fluid, as claimed in claim 1, wherein the member is sodium bromide.

4. A clear, calcium-free fluid, as claimed in claim 1, wherein the member is potassium bromide.

5 A clear, calcium-free fluid, as claimed in claim 1, wherein the member is a mixture of sodium and potassium bromides.

6. A clear, high density calcium-free fluid, as claimed in claim 1, and further comprising an effective amount of thioglycolate and/or thiocyanate group containing corrosion inhibitor.

7. A clear, high density calcium-free fluid, as claimed in claim 1, and further comprising an effective amount of a hydroxyethyl cellulose-based viscosifying agent.

8. A clear, calcium-free fluid, as claimed in any of claims 1 to 7, wherein the solution comprises no more than 44.0 percent zinc bromide by weight.

9. A method for drilling, completion or workover of wells comprising injecting into the well a clear, high-density calcium-free fluid, as claimed in claim 1.

**Patentansprüche**

1. Für die Verwnedung als Bohrlochfertigstell-, -abdicht- und -perforationsmittel angepaßte klare, hochdichte, calciumfreie Flüssigkeit, gekennzeichnet durch eine wäßrige Lösung von 2 bis 56 Gew.-% Zinkbromid und 14 bis 54 Gew.-% wenigstens eines aus der Gruppe von Lithiumbromid, Natriumbromid, Kaliumbromid und Mischungen von Natriumbromid und Kaliumbromid ausgewählten Bestandteils, wobei die Lösung eine in dem Bereich von 1380 bis 2460 kg/m$^3$ (11,5 bis 20,5 Pfund pro Gallone) liegende Dichte und einen in dem Bereich von pH 1,0 bis 7,5 liegenden pH-Wert hat.

2. Klare, calciumfreie Flüssigkeit nach Anspruch 1, worin der Bestandteil Lithiumbromid ist.

3. Klare, calciumfreie Flüssigkeit nach Anspruch 1, worin der Bestandteil Natriumbromid ist.

4. Klare, calciumfreie Flüssigkeit nach Anspruch 1, worin der Bestandteil Kaliumbromid ist.

5. Klare, calciumfreie Flüssigkeit nach Anspruch 1, worin der Bestandteile eine Mischung von Natrium- und Kaliumbromid ist.

6. Klare, hochdichte, calciumfreie Flüssigkeit nach Anspruch 1, welche weiter eine wirksame Menge eines eine Thioglykolat- und/oder Thiocyanatgruppe enthaltenden Korrosionsinhibitors enthält.

7. Klare, hochdichte, calciumfreie Flüssigkeit nach Anspruch 1, welche weiter eine wirksame Menge eines viskos werdenden Mittels auf Basis von Hydroxyethylcellulose enthält.

8. Klare, calciumfreie Flüssigkeit nach einem der Ansprüche 1 bis 7, worin die Lösung nicht mehr als 44,0 Gew.-% Zinkbromid enthält.

9. Verfahren zum Bohren, Fertigstellen oder Nachbearbeiten von Bohrlöchern, gekennzeichnet durch Injizieren einer klaren, hochdichten, calciumfreien Flüssigkeit nach Anspruch 1 in das Bohrloch.

**Revendications**

1. Fluide exempt de calcium, de haute densité, clair, destiné à être utilisé comme milieu d'achèvement, de remblai et de forage des puits, comprenant une solution aqueuse de 2 à 56% en poids de bromure de zinc et de 14 à 54% en poids d'au moins un élément choisi dans le groupe constitué du bromure de lithium, du bromure de sodium, du bromure de potassium et des mélanges de bromure de sodium et de bromure de potassium, la solution ayant une densité comprise dans la gamme allant de 1380 à 2460 kg/m$^3$ et un pH situé dans la gamme allant de 1,0 à 7,5.

2. Fluide exempt de calcium, clair, selon la revendication 1, dans lequel l'élément est le bromure de lithium.

3. Fluide exempt de calcium, clair, selon la revendication 1, dans lequel l'élément est le bromure de sodium.

4. Fluide exempt de calcium, clair, selon la revendication 1, dans lequel l'élément est le bromure de potassium.

5. Fluide exempt de calcium, clair, selon la revendication 1, dans lequel l'élément est un mélange de bromures de sodium et de potassium.

6. Fluide exempt de calcium, de haute densité, clair, selon la revendication 1, qui comporte en outre une quantité efficace du groupe thioglycolate et/ou thiocyanate contenant un inhibiteur de corrosion.

7. Fluide exempt de calcium, de haute densité, clair, selon la revendication 1, comprenant en outre une quatité efficace d'un agent conférant de la viscosité, à base d'hydroxyéthylcellulose.

8. Fluide exempt de calcium, clair, selon l'une des revendications 1 à 7, dans lequel la solution ne comprend pas plus de 44,0% en poids de bromure de zinc.

9. Procédé pour le forage, l'achèvement ou le reconditionnement des puits, comprenant l'injection dans le puits d'un fluide exempt de calcium de haute densité, clair, selon la revendication 1.